Europäisches Patentamt

(19) European Patent Office

Office européen des brevets

(11) Publication number: **0 185 518**
**A2**

(12) # EUROPEAN PATENT APPLICATION

(21) Application number: 85309064.5

(22) Date of filing: 12.12.85

(51) Int. Cl.⁴: **H 01 B 7/36**

(30) Priority: 15.12.84 GB 8431727

(43) Date of publication of application:
25.06.86 Bulletin 86/26

(84) Designated Contracting States:
AT BE CH DE FR GB IT LI NL SE

(71) Applicant: RAYCHEM LIMITED
Rolls House 7, Rolls Buildings Fetter Lane
London, EC4 1NL(GB)

(72) Inventor: Dupuis, Dominique
12 rue Gabrielle Faure La Bataille
F-78370 Plaisir(FR)

(72) Inventor: Thorley, Robert
36 Church Walk South
Swindon Wiltshire, SN2 2JE(GB)

(74) Representative: Dlugosz, Anthony Charles et al,
Raychem Limited Intellectual Property Law Department
Faraday Road
Dorcan Swindon Wiltshire(GB)

(54) Marker assembly.

(57) A market assembly for marking wires, panels and the like comprises a transparent marker layer (1, 61) to be attached to the object to be marked, and a backing layer (6, 67) located at the rear surface of the marker layer, between the marker layer and the object, the backing layer being provided with a print generation medium, for example a printing ink, so that when the assembly is subjected to a printing operation, for example when it is struck by an impact printer, indicia will be formed on the rear surface of the marker layer.

The assembly may be used to provide permanent markings which are highly resistant to solvents and mechanical abuse such as abrasion since the indicia are protected by the marker layer itself.

Fig. 5.

Fig. 7.

EP 0 185 518 A2

Croydon Printing Company Ltd.

## MARKER ASSEMBLY

This invention relates to marker assemblies for marking objects, for example for marking elongate objects such as electrical wires and cables, and also for marking large objects that are conventionally marked by means of panel markers.

There is often a need for identifying components in complex assemblies where wires and cables need to be identified. In the past wires and cables in electrical assemblies have been identified by impressing identifying characters into the insulation of the wire or cable, a process which risks impairing the insulating integrity of the wire or cable. More recently it has been proposed to print identifying information onto plastic tubes which can be slipped over the ends of the wires, or, where it has been necessary to identify cables of relatively large diameter, to print information onto a tag which is then attached to the cable by means of a plastics clip or so-called "tie wrap". In order to overcome the disadvantages of such systems, and especially the abrupt changes in the profile that are caused by the labels, it has been proposed to produce heat-recoverable markers, either in the form of sleeves or tape, which can be positioned on the object to be marked and recovered so that they are held tightly on the object. Examples of such systems are described in U.S. Patents Nos. 3,894,731, 4,032,010 and 4,206,909 and in British Patent Specifications Nos. 2,059,913A and 2,082,110A, the disclosures of which are incorporated herein by reference.

One disadvantage of all such systems, whether heat-recoverable or not, is that when the object that is marked is subjected to mechanical abuse, it is possible for the indicia on the marker to be erased. This problem is overcome to some extent with the heat-recoverable systems mentioned above by subjecting the printed marker sleeves to a so-called "permatizing" operation in which the sleeves are exposed to an infrared radition source for a short period of time. This procedure, however, cannot prevent erasure of indicia when the object is subjected to severe mechanical abuse, for example abrasion of the wire or cable when being pulled through a bulkhead, in which the surface of the marker may be completely worn away. In addition indicia may be erased when the assembly is exposed to solvents and other fluids.

The present invention provides a marker assembly which comprises a transparent marker layer which is arranged to be attached to an object to be marked, the marker layer having a front surface arranged to face outwardly from the object and a rear surface arranged to face toward the object, the assembly including a backing layer located at the rear surface of the marker layer, the backing layer being provided with a print generation medium which will create an indicium at the rear surface of the marker layer when the assembly is subjected to a printing operation.

The marker assembly may be arranged to work with any of a number of printers. For example some of the systems described below will be capable of being marked using a thermal printer. Preferably, however, the backing member is capable of creating an indicium at the rear surface of the marker layer when the assembly is struck by an impact printer and most preferably when the front surface of the marker layer is struck by an impact printer, for example a typewriter or an electronically controlled printer such as a golf-ball, daisy wheel or dot-matrix printer. In order to ensure adequate sharpness of the indicia when the assembly is struck at the front surface of the marker layer, it is preferred for the marker layer to have a thickness in the range of from 0.05 to 1.5mm and especially from 0.2 to 1.0mm.

The assembly according to the present invention has the advantage that it may be used with conventional printing equipment in exactly the same way as the previously proposed marker systems, but the indicia that are formed are generated at the unexposed surface of the marker layer that is positioned adjacent to the object to be marked so that a significant quantity of the marker layer material may be worn away by mechanical abuse of the marked object with no deterioration in the legibility of the indicia.

In one simple form of assembly the print generation medium comprises a pigment and a portion of the print generation medium is transferred from the backing layer to the rear surface of the marker layer during generation medium may comprise a printing ink which is deposited on the backing layer, or a porous backing layer may be impregnated with the ink, and the ink then allowed partially to dry.

A number of standard, commercially available inks may be used, the inks usually comprising a solvent soluble or insoluble pigment, e.g. carbon black, and an ink binder e.g. an aliphatic ester.

Alternatively the print generation medium may comprise a reflective pigment, ie. a white or other lightly coloured pigment. This form of pigment is especially useful if the transparent marker layer incorporates a fluorescent material so that the pigment enhances the fluorescence of the marker layer in those areas in which the pigment has transferred to the marker layer.

In another form of assembly the print generation medium may comprise at least part of a reactive chemical system in which reactive components are separated from one another but are caused to react when the assembly is subjected to a printing operation, the system producing a pigment on reaction of the components thereby generating an indicium at the rear surface of the marker layer. The unreacted components may both be located on the backing layer. provided that the pigment produced when they are reacted will be transferred to the marker layer, or one of the reactive components may be located on the rear surface of the marker layer. The reactive components are advantageously separated from one another by encapsulating at least one of the components to form microcapsules, some of which are caused to burst and allow the components to react when the assembly is struck by an impact printing operation or when subjected to a thermal printing operation. The reactive system may use any of a number of well known colour forming reactions such as oxidation/reduction or acid/base reactions. For example one component may comprise an organic dye forming material such as methyl orange or phenolphthalein and the other may comprise a suitable co-reactant, e.g. sodium hydroxide in the case of phenolphthalein or sodium bisulphate in the case of methyl orange. Other possible systems include those based on the formation of metal complexes, e.g. $Ni(NH_3)_6^{++}$ or $Fe(SCN)^{++}$, from the metal ions and the ligands or the formation of highly pigmented materials such as cobalt sulphide.

In another form of system a single print generation medium may be microencapsulated and then converted to a pigment after the printing operation. For example a photoreactive material such as cis-p-(phenylazo)phenylammonium iodide may be microencapsulated. After the printing operation in which only those microcapsules corresponding to the printed indicia have been ruptured, the released material is subjected to radiation of wavelength 670nm to undergo a photosensitized cis-trans isomerisation and thereby turn blue.

It is preferred for the assembly to include some means of ensuring that once the desired indicia have been printed, no further marks are formed by the print generation medium due to mishandling of the assembly, for example as may be formed by accidentally knocking the marker or by resting sharp, heavy objects on the marker, both of which may cause sufficient localized pressure to generate marks. Prevention of such marks may be ensured by more than one way. For example the backing layer and the marker layer may be separable so that the backing member may be removed from the marker layer after indicia have been printed and before the marker layer has been attached to the object. This mechanism is the simplest solution to the problem and is the most convenient solution in the case of assemblies in which a pigment e.g. printing ink is transferred from the backing layer to the marker layer although it may also be used in cases where one reactive component is located on the backing layer and the other is located on the rear surface of the marker layer. An alternative solution, which is appropriate to assemblies that use a microencapsulated print generation medium is to form the microcapsules using a curable, e.g. an ultraviolet radiation curable encapsulant so that after curing of the encapsulant, further bursting of the microcapsules is prevented. This may be achieved for example by forming the microcapsules in a bentone gel matrix in which case the assembly should be exposed briefly to an ultraviolet lamp immediately after printing to cross-link the matrix. In another arrangement, the microencapsulated print generation medium may include an ultraviolet curable polymeric component, for example a polyisocyanate together with a peroxide initiator, so that when the arrangement is exposed to light of the appropriate wavelength after printing the print generation medium itself becomes cross-linked.    Although this arrangement is somewhat more complicated than using a removable backing member, it has the advantage that mishandling of the assembly before it is attached to the object (which is usually the time at which the backing layer would be removed) will not generate any marks.

In many circumstances it is desirable for indicia to be printed on a background of uniform colour, for example to ensure adequate indicia/background contrast irrespective of the colour of the object to be marked or in order to allow colour coding of the markers. This may be achieved in the assemblies according to the invention by providing the rear surface of the marker layer with an opaque layer.  The opaque layer must, of course, permit any indicia formed by the printing operation to be seen from the front surface of the marker layer, and the way in which this is achieved will depend on the particular system used to generate indicia.

In certain instances, for example where the backing layer is provided with ink or other pigment that is transferred to the marker layer, the opaque layer should be relatively thin, for example having a thickness in the range of from 10 to 100 micrometres, and preferably from 20 to 50 micrometres.  In this case the pigment will simply be punched through the opaque layer during the printing operation and so be visible from the front of the marker layer.  If the opaque layer is sufficiently porous to absorb the pigment in the regions of high pressure during the printing operation (corresponding to the font of the indicium) then the thickness of the opaque layer may be increased provided that the outlines of the indicia do not become too blurred. A further advantage of the use of these forms of opaque layer is that the layer will obscure any smearing of the pigment on the rear of the marker layer when the backing layer is removed, this being particularly important when the marker layer is in the form of a sleeve, as mentioned below.

Alternatively, in the case of assemblies that use reactive chemical systems to generate the pigment for the indicia, one of the reactive components may be present in the opaque layer, either as a continuous phase or in the form of microcapsules, so that the pigment is formed directly in the opaque layer.

In yet another form of assembly the opaque layer may be provided by the backing layer itself. Thus, the print generation medium may be in the form of a single component microencapsulated system in which the microcapsules are sandwiched between the marker layer and the opaque backing layer or are dispersed in the opaque backing layer. If a two component microencapsulated system is used the microcapsules may be located as described above for a single component system or one component may be dispersed in the opaque backing layer while the other is sandwiched between the backing layer and the marker layer. Since it is not possible to remove the backing layer in these forms of assembly, it is highly desirable for the encapsulating material to be curable as described above in order to prevent any subsequent pressure marking of the marker layer.

The opaque layer may be formed in a number of ways. For example it may be formed from a polymeric material as a separate thin sheet and laminated on the marker layer or, especially in the case of tubular markers, may be coextruded with the marker layer. Alternatively the opaque layer may be applied to the marker layer as a liquid e.g. in the form of a solution or dispersion, and then allowed to dry and, if desired, cure. Another method of applying the opaque layer comprises blowing a powder onto the marker layer at an elevated temperature. The opaque layer may be applied to the marker layer after the printing operation if desired. For example an arrangement may be produced in which the backing layer is located between the marker layer and the opaque layer and is removable so that, after indicia have been printed on the rear surface of the marker layer during the printing step, the backing layer is removed and the resulting assembly be subjected to a pressing or rolling operation which causes the opaque layer to adhere to the rear face of the backing layer.

The marker assemblies according to the invention may have a variety of configurations. For example, the marker layer may be in the form of a sheet so that it can be used to mark large objects, either as a panel marker, in which case the rear surface of the marker layer is preferably provided with a layer of adhesive, e.g. a hot-melt, pressure sensitive or cyanoacrylate adhesive, or as a cable marker, in which case it may be attached to the object by means of a tie-wrap.

The marker assembly may instead be in the form of a sleeve, preferably an open-ended sleeve, so that it can be slipped over the end of a wire, cable or other item of electrical equipment. In the case of sleeve marker layeres, it is preferred for the marker layer to be dimensionally-recoverable, and most preferably dimensionally heat-recoverable. Heat-recoverable articles usually recover on heating toward an original shape from which they have previously been deformed, but the term "heat-recoverable" as used herein also includes an article which, on heating, adopts a new configuration, even if it has not previously been deformed. The production of heat-recoverable articles is well known and is described in the U.S. Patents Nos. 3,894,731, 4,032,010, 4,206,909 and British Patent Specifications Nos. 2,059,913A and 2,082,110A mentioned above. As will be seen from British Specification No. 2,059,913A, the use of heat-recoverable markers is not limited to sleeves but may also be in the form of sheets.

The marker layer may be formed from a range of polymers and polymer compositions provided that it is sufficiently transparent to enable the indicia formed to be read through the polymeric material. Preferred materials for forming the marker layer include polyolefins and olefin copolymers, especially polyethylene and ethylene copolymers e.g. copolymers of ethylene with $C_3$ to $C_6$ alpha olefins, vinyl acetate or ethyl acrylate; fluorocarbons e.g. polyvinylidine fluoride, polyamides e.g. nylon 11 or nylon 12, polyesters and ionomers e.g. Surlyn (RTM) ionomer.

If the marker layer is dimensionally recoverable, it is preferred for it to be cross-linked, either chemically or by irradiation e.g. by gamma radiation or by high energy electrons. In a typical chemically cross-linked composition there will be about 0.5 to 5 weight per cent of peroxide based on the weight of the polymeric composition. The cross-linking agent may be employed alone or in association with a co-curing agent such as a polyfunctional vinyl or allyl compound, e.g. triallyl cyanurate, triallyl isocyanurate or pentaerythritol tetra methacrylate.

Radiation cross-linking may be effected by exposure to high energy irradiation such as an electron beam or gamma rays. Radiation dosages in the range of 2 to 80 Mrads, preferably 2 to 50 Mrads, e.g. 2 to 20 Mrads and particularly 4 to 15 Mrads are in general appropriate.

For the purpose of promoting cross-linking during irradiation preferably from 0.2 to 5 weight per cent of a prorad such as a polyfunctional vinyl or allyl compound, for example, triallyl cyanurate, triallyl isocyanurate or pentaerythritol tetramethacrylate are incorporated into the composition prior to irradiation.

Several forms of marker assembly according to the invention will now be described by way of example with reference to the accompanying drawings in which:

Figure 1 shows one for of heat-shrinkable marker assembly according to the invention;

Figure 2 is a section along the line II-II of figure 1;

Figure 3 shows a second form of assembly according to
the invention;

Figure 4 is a section along the line IV-IV of figure
3;

Figure 5 shows a third form of device according to the
invention;

Figure 6 is a section along the line VI-VI of figure
5; and

Figures 7 and 8 show a fourth form of device according
to the invention.

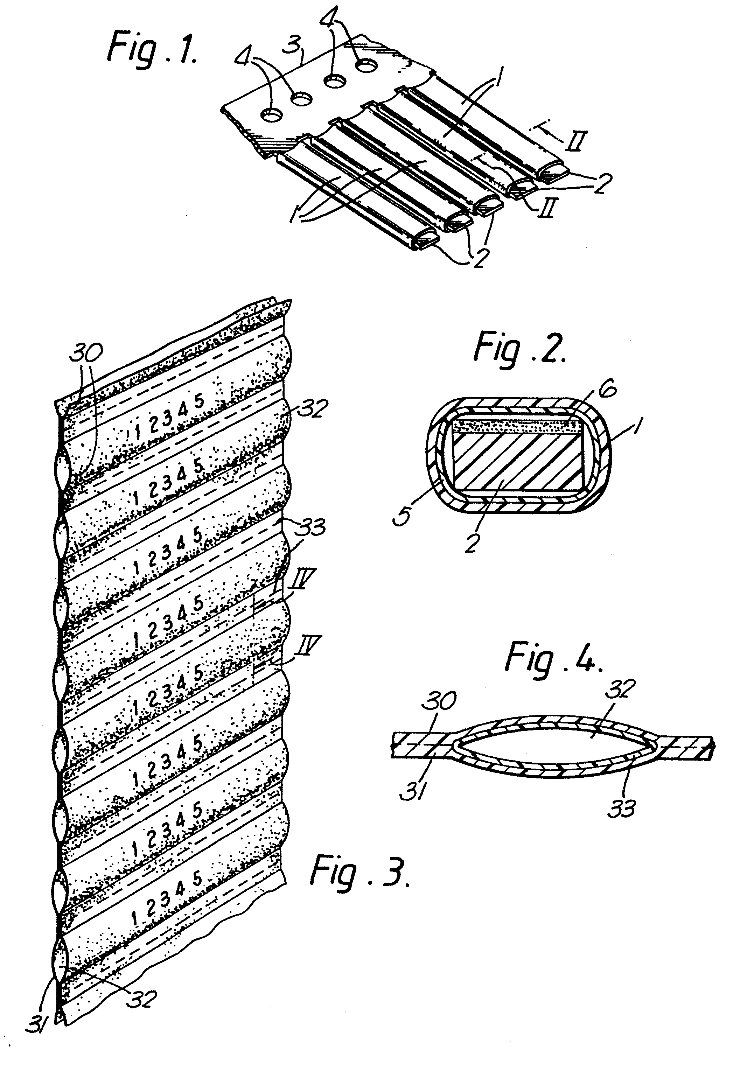

Referring to figures 1 and 2 of the accompanying
drawings a marker sleeve assembly comprises a number of
dimensionally heat-shrinkable sleeves 1 that are each
partially recovered about a one of a number of bars 2
that extend transversely from one side of a spine 3.
The spine 3 is provided with an array of sprocket holes
4 so that the assembly can be fed into a conventional
typewriter or impact printer, with suitable modification to the typewriter or printer platten, and one
flat surface of each heat-shrinkable sleeve will be
presented to the printer head in correct register for
printing indicia on the assembly.

As shown in figure 2 in which the thickness of
various parts of the assembly have been exaggerated for
the sake of clarity, each heat-shrinkable sleeve 1,
which is formed from transparent colourless irradiation
cross-linked low density polyethylene is provided with an inner opaque layer 5 of desired colour which has been formed by coating the inner layer of the sleeve 1 with a dispersion of a polyester in methanol, or an emulsion of an ethylene/vinyl acetate copolymer or polyvinyl alcohol in water, and allowing the solvent to evaporate. Each bar or backing layer 2 is provided with a thin porous coating 6, for example a fibre mat that has been impregnated with printing ink, or is simply dipped in printing ink and the ink allowed partially to dry. The sleeves 1 are then positioned over the bars 2 and briefly heated to recover the sleeves partially over the bars.

In order to print indicia, the assembly is fed into a printer that has had its printing ribbon removed and the printing head will strike the flat surface of the sleeves thereby causing part of the printing ink 6 to adhere to the inner surface of the sleeve 1 or to impregnate the opaque layer 5. The sleeves 1 may then be removed and installed on the electrical wires in conventional manner.

Figure 3 shows another form of marker assembly that has been formed as described in British Patent Application No. 2,082,110A by stretching a pair of thermoplastic sheets 30 and 31 at a temperature below their melting or softening point, bonding the sheets together to form a plurality of open-ended sleeves 32 separated from one another by bonded portions 33 that contain lines of weakness to allow individual sleeves to be removed. After the sheets have been bonded together, the assembly is irradiated by means of high energy electrons in order to cross-link the polymeric material forming the sheets. The sheets 30 and 31 have been formed from colourless transparent low density polyethylene. After the sheets have been stretched, but before they are bonded together, one of the sheets 30 is coated with a dispersion of microencapsulated colour starter in a pattern of transverse stripes, each stripe corresponding to the position of one of the sleeves 32. Both sheets are then coated with a dispersion of a pigment as described with reference to figure 1 to form a pattern of stripes of opaque material 33. The opaque material 33 that has been applied to sheet 30 also contains a dispersion of microencapsulated co-reactant and is applied over the stripes of the first dispersion. When the sheets 30 and 31 are bonded together, they are aligned in register with each other so that substantially the entire inner surface of each sleeve 32 has an opaque layer 33.

The assembly may be subjected to a conventional impact printing operation as described above during which the microcapsules of the colour starter and co-reactant rupture under the impact of the print head to form the desired indicia. If the microcapsules employ an encapsulant such as a bentone gel matrix, the assembly may be exposed briefly to an ultraviolet lamp after the printing operation in order to cure the encapsulent and prevent any further accidental marks being formed in the sleeve.

The microencapsulated system described in this assembly may be used in the assembly shown in figures 1 and 2 simply by removing the coating 6 and coating the inner surface of the sleeves 1 with the appropriate microencapsulated colour starter dispersion before the opaque layer 5 is applied.

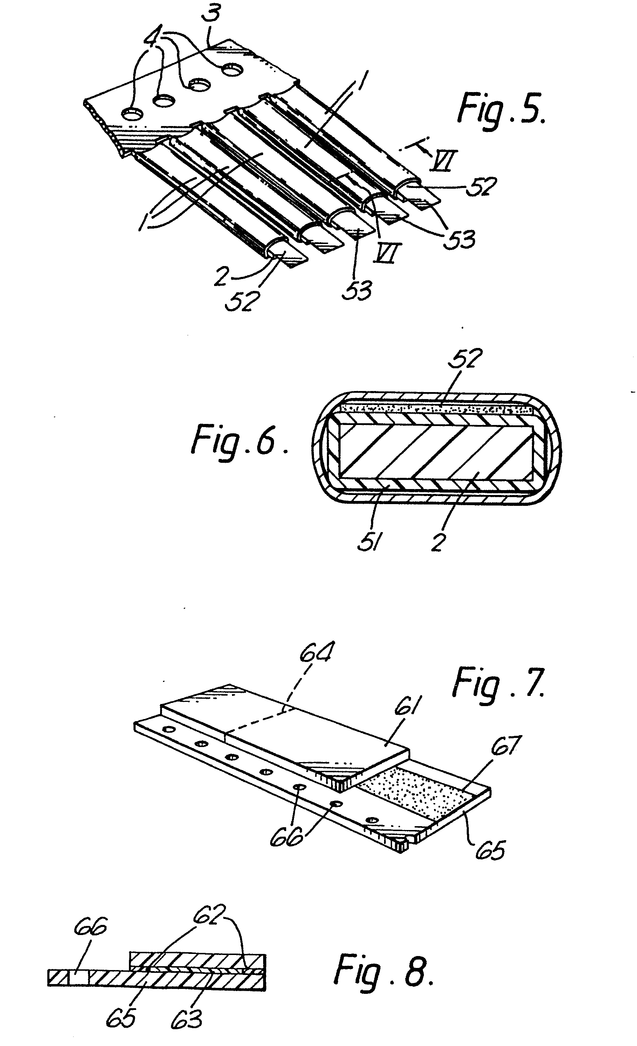

Figures 5 and 6 show a modification of the assembly shown in figures 1 and 2. In this assembly the bars 2 are each coated with a layer 51 of a pigmented opaque dispersion, and the backing layer comprises a strip 52 of ink impregnated cloth or carbon paper located on, but not adhering to, the bar 2 the strip 52 having a pull-tab 53 located at its free end.

When the assembly is subjected to a printing operation, ink from the strip 52 is transferred to the inner surface of the transparent heat-shrinkable sleeve 1 to form the indicia. After the printing step, the strips 52 are pulled out from the sleeves 1 by means of the pull-tabs 53 and are discarded. The assembly is then subjected briefly to pressure in a press or by running a roller along the assembly in order to transfer the opaque material from the layer 51 to the inner surface of the sleeves 1. The sleeves may then be removed from the bars and recovered onto wires or other objects by heating in conventional manner.

Figures 7 and 8 show another form of marker assembly in which a strip 61 of transparent colourless polyvinylidine fluoride is provided on its rear surface with a line 62 of adhesive, for example a hot-melt, pressure sensitive, or contact adhesive, along each edge thereof, and also with an opaque layer 63 formed as described above. The strip 61 is provided with a number of transversely extending lines of weakness 64 to enable the strip to be separated manually into a number of individual markers.

The strip 61 is located on, and temporarily bonded to, a backing strip 65 formed for example from nylon 6.6. The backing strip 65 is provided along its length with a line of sprocket holes 66 for engaging a drive sprocket of a printer, and with a layer of ink 67.

When indicia have been printed on the rear surface of the strip 61 by means of the ink layer 61, an individual portion of the strip 61 may be peeled away from the backing strip 65 and separated from the remainder of the strip 61. The separated portion of the marker strip 61 is then ready to be affixed to a substrate.

This form of assembly may, if desired, employ a longitudinally recoverable marker strip 61, for example if it is intended to be wrapped around an elongate object such as a pipe or cable. However in many cases, for example where it is intended to be used as a panel marker, the strip 61 will be dimensionally stable.

If desired, this form of marker assembly may instead use the microencapsulated system described with reference to figures 3 and 4 above simply by coating the marker strip 61 with the appropriate microencapsulated colour-starter before the opaque layer 63 (which may contain co-reactant) is applied, and by ommitting the ink layer 67.

Although the printers used for the printing step will usually be modified by removing the printing ribbon this is not essentail. It is always possible to print indicia directly onto the external surface of the marker layer in addition to generating the same indicia on the rear surface thereof although, as will be appreciated, the externally applied indicia may be erased from the markers by rough handling of the objects that have been marked.

CLAIMS:

1.    A marker assembly which comprises a transparent
marker layer which is arranged to be attached to an
object to be marked, the marker layer having a front
surface arranged to face outwardly from the object and
a rear surface arranged to face toward the object, the
assembly including a backing layer located at the rear
surface of the marker layer, the backing layer being
provided with a print generation medium which will
create an indicium at the rear surface of the marker
layer when the assembly is subjected to a printing
operation.

2.    An assembly as claimed in claim 1, wherein the
backing layer is capable of creating an indicium at the
rear surface of the marker layer when the assembly is
struck by an impact printer preferably on the front
surface of the marker layer.

3.    An assembly as claimed in claim 1 or claim 2,
wherein the print generation medium comprises a pigment
and a portion of the print generation medium is transferred from the backing layer to the rear surface of
the marker layer during the printing operation.

4.    An assembly as claimed in claim 3, wherein the
print generation medium comprises a printing ink or a
reflective pigment.

5.    An assembly as claimed in claim 1 or claim 2,
wherein the print generation medium comprises at least
part of a reactive chemical system in which reactive components are separated from one another but are caused to react when the assembly is subjected to a printing operation, the system producing a pigment on reaction of the components thereby generating an indicium at the rear surface of the marker layer.

6.     An assembly as claimed in claim 7, wherein at least one of the reactive components is encapsulated in microcapsules, some of which are caused to burst when the assembly is subjected to an impact printing operation.

7.     An assembly as claimed in any one of claims 1 to 6, wherein the rear surface of the marker layer is provided with an opaque layer for providing a uniform background for the indicia, the opaque layer permitting any indicia formed by the printing operation to be seen from the front surface of the marker layer.

8.     An assembly as claimed in any one of claims 1 to 7, wherein the backing layer and the marker layer are separable so that the backing layer may be removed from the marker layer after indicia have been printed and before the marker layer is attached to the object.

9.     An assembly as claimed in any one of claims 1 to 8, wherein the rear surface of the marker layer is provided with an adhesive for bonding the marker layer to the object to be marked.

10.     An assembly as claimed in any one of claims 1 to 9, wherein the marker layer is in the form of a marker sleeve that is capable of being located about an elongate object to be marked.

11.    An assembly as claimed in any one of claims 1 to 10, wherein the marker layer is dimensionally recover able

12.    A method of marking an object which comprises subjecting a marker assembly as claimed in any one of claims 1 to 11 to a printing operation and then attaching the marker layer to the object.

* * * * * *

Fig.1.

Fig.2.

Fig.4.

Fig.3.

Fig.5.

Fig.6.

Fig.7.

Fig.8.